## Europäisches Patentamt
## European Patent Office
## Office européen des brevets

(11) Numéro de publication: **0 128 811**
**B1**

(12) # FASCICULE DE BREVET EUROPÉEN

(45) Date de publication du fascicule du brevet:
23.07.86

(51) Int. Cl.⁴: **B 23 Q 3/157**

(21) Numéro de dépôt: **84401113.0**

(22) Date de dépôt: **30.05.84**

(54) Perfectionnements aux dispositifs changeur d'outil pour machine-outil.

(30) Priorité: **03.06.83 FR 8309244**

(43) Date de publication de la demande:
**19.12.84 Bulletin 84/51**

(45) Mention de la délivrance du brevet:
**23.07.86 Bulletin 86/30**

(84) Etats contractants désignés:
**AT BE CH DE FR GB IT LI LU NL SE**

(56) Documents cité:
**EP-A-0 011 710**
**FR-A-2 391 809**
**US-A-4 196 506**
**US-A-4 274 192**

(73) Titulaire: **COMPAGNIE INTELAUTOMATISME, 1, rue de la Corderie, F-94596 Rungis Cedex (FR)**

(72) Inventeur: **Rouzaud, Guy, 1 Avenue de Malabry, F-92290 Chatenay- Malabry (FR)**

(74) Mandataire: **Loyer, Yves, CABINET PIERRE LOYER 18, rue de Mogador, F-75009 Paris (FR)**

LIBER, STOCKHOLM 1986

## Description

La technique du changement d'outil automatique est déjà ancienne et a fait l'objet de nombreux brevets. Certains d'entre eux comportent l'usage d'un bras double symétrique à deux pinces d'extrémités, ce qui permet d'effectuer le changement d'outil par déplacements du bras selon son axe combinés avec une rotation de 180°, et l'invention se rapporte à un changeur d'outil de ce type.

Cependant, pour que l'opération soit exécutée rapidement, il faut que l'outil de rechange soit, ou bien placé d'avance sur le bras double ou bein prélevé dans le magasin simulanément à la prise de l'outil situé dans la broche.

Certains dispositifs prévoient un bras double à mouvement complexe permettant au bras double d'aller prélever un outil sur le magasin pendant la phase de travail de la machine, de sorte que le bras double soit de retour en position de changement, muni de l'outil de rechange avant la fin de cette phase de travail.

Cette solution est d'une grande complication mécanique compte tenu des précisions de positions nécessaires à l'automatisation des mouvements.

D'autres dispositifs prévoient de placer le magasin de telle sorte que l'outil de rechange présente en position symétrique de celle de l'outil sur la broche en position de changement.

Cette disposition a pour inconvénient une position du magasin qui est incommode du point de vue du fonctionnement de la machine-outil, et exige une très grande rigueur de position du poste de changement d'outil sur le magasin.

Pour résoudre ces problèmes, il a déjà été proposé de placer le magasin à l'emplacement le plus avantageux et de prévoir un chariot de transfert entre le magasin et le bras double, ce chariot ayant pour fonction de prélever l'outil suivant dans magasin et de l'amener en position symétrique de l'outil en broche pendant la phase de travail de la machine, de sorte que les mouvements du bras double puissent être réduits au minimum, et exécutés rapidement en toute sécurité.

L'invention se rapporte à des perfectionnements aux machines de ce type décrites par exemple dans FR-A-2391809 et permettant notamment de réaliser de façon simple et efficace les divers rattrapages d'erreurs ou écarts de positionnement inhérentes à la fabrication et aux jeux de fonctionnement, rattrapages nécessaires à une automatisation de cadence élevée avec une sécurité de fonctionnement accrue.

Le dispositif selon l'invention est defini dans la revendication 1.

Par cet ensemble de dispositions, on obtient une position fixe et sûre de l'outil lorsque le chariot est en position de changement d'outil, du fait que les positions du manchon dans le bloc, du bloc dans le chariot et du chariot sur les barres sont définies par des butées positives; le bras double peut alors, en toute sécurité effectuer les manoeuvres de prise d'outil simultanées sur la broche et le chariot, l'extraction des outils et leur échange par rotation de 180° et coulissement inverse.

A l'opposé, lorsque le chariot est en position de coopération avec le magasin, les écarts de positionnement pouvant atteindre 1 mm sont aisément absorbés dans les trois directions de l'espace ainsi qu'il sera exposé plus en détail ultérieurement, ce qui est d'un grand avantage tant à la fabrication qu'au fonctionnement parce que les magasins, en particulier les magasins à chaine, ne peuvent pas être réalisés avec une précision absolue en ce qui concerne la position de l'outil au poste de chargement.

L'invention peut inclure les caractéristiques suivantes:

a) Le coulissement du manchon dans le bloc est commandé, par l'extrémité de la tige d'un vérin situé en position fixe par rapport au magasin et le manchon porte une fourchette qui vient coopérer avec un diabolo monté entre deux ressorts sur ladite extrémité de tige de vérin lorsque le chariot est en position de prise ou de remise d'outil dans le magasin.

b) Le manchon coulisse dans le bloc sur un arbre porté par ledit bloc, perpendiculaire à l'axe de basculement du bloc et il est maintenu en position angulaire avec jeu d'oscillations par des patins portés par le manchon et contretenus par ressorts, ces patins glissant sur des surfaces planes du bloc parallèles à l'arbre de coulissement.

c) La retenue d'un outil dans le manchon est obtenue par la rotation de deux cames situées de part et d'autre d'un bouton terminal porté par la queue de l'outil, cette rotation résultant de l'action d'une crémaillère commune agissant sur des pignons portés par les arbres porte-cames.

d) De préférence, cette crémaillère est contretenue par ressort dans le sens de la retenue de l'outil, un vérin étant prévu pour assurer le relâchement en repoussant la crémaillère à l'encontre du ressort.

e) Le bloc porté par le chariot est maintenu en position relevée pendant le transfert et le coulissement du manchon vers l'arrière est empêché par appui d'une butée portée par ledit manchon sur une glissière fixe par rapport au magasin dont l'extrémité proche du magasin est placé de telle sorte que le manchon ne peut coulisser que lorsque le chariot est en position de coopération avec le magasin.

Une réalisation de l'invention sera plus amplement décrite avec référence aux dessins annexés sur lequel:

La figure 1 est une vue schématique d'ensemble du dispositif.

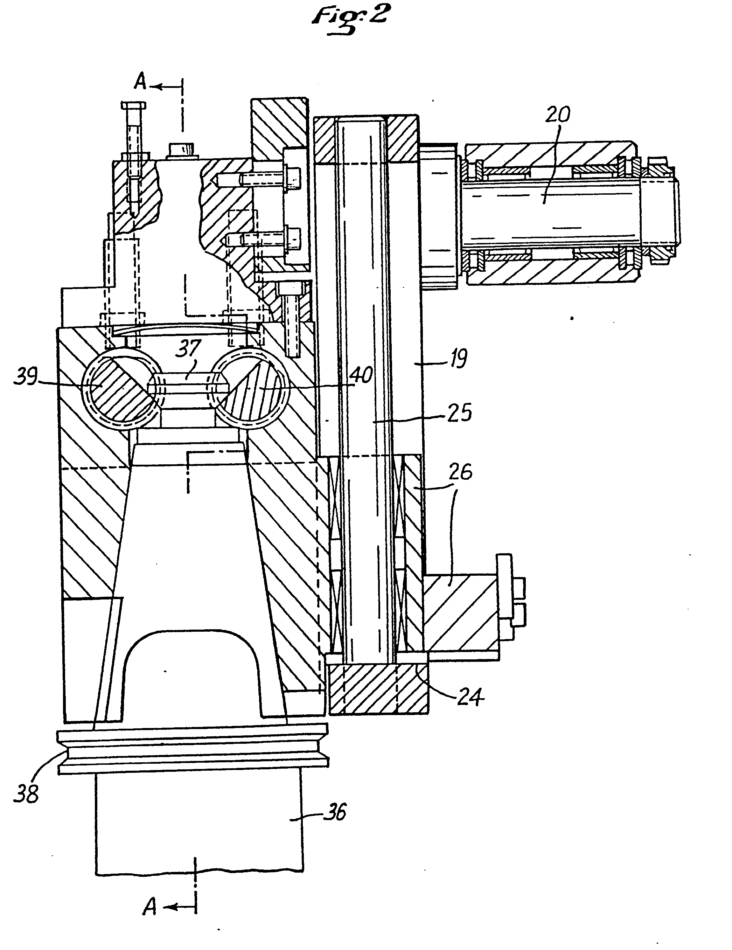

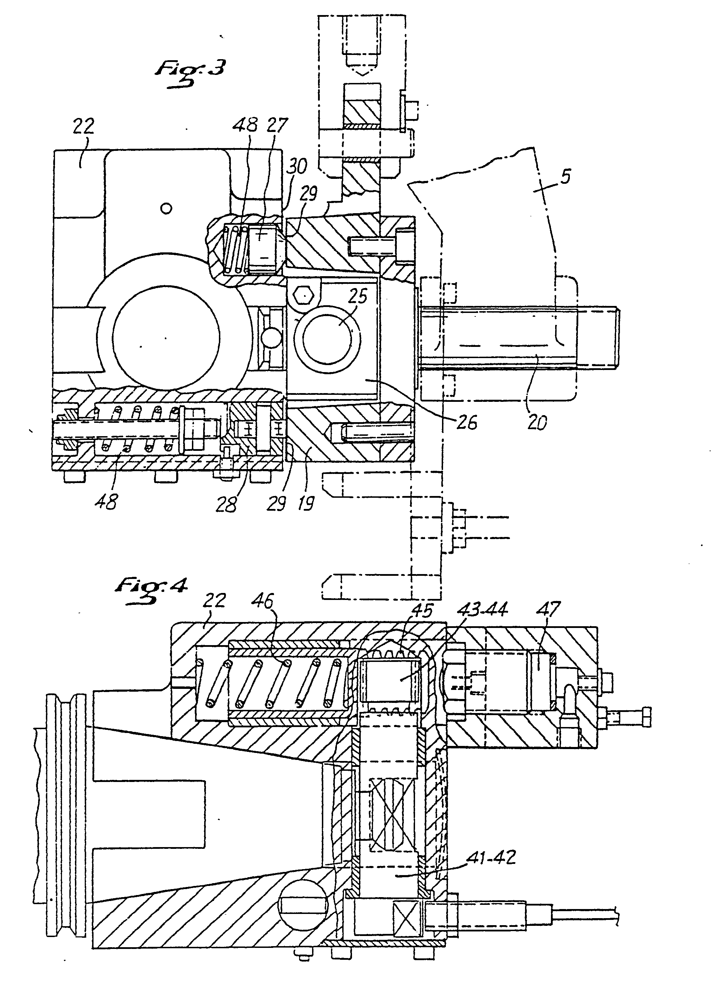

Les figures 2, 3, 4, sont des vues de détail de l'ensemble bloc basculant et manchon coulissant; figure 2 coupe selon les axes de basculement et de coulissement; figure 3 vue en bout du manchon avec arrachement partiel; figure 4 coupe partielle selon AA de la figure 2.

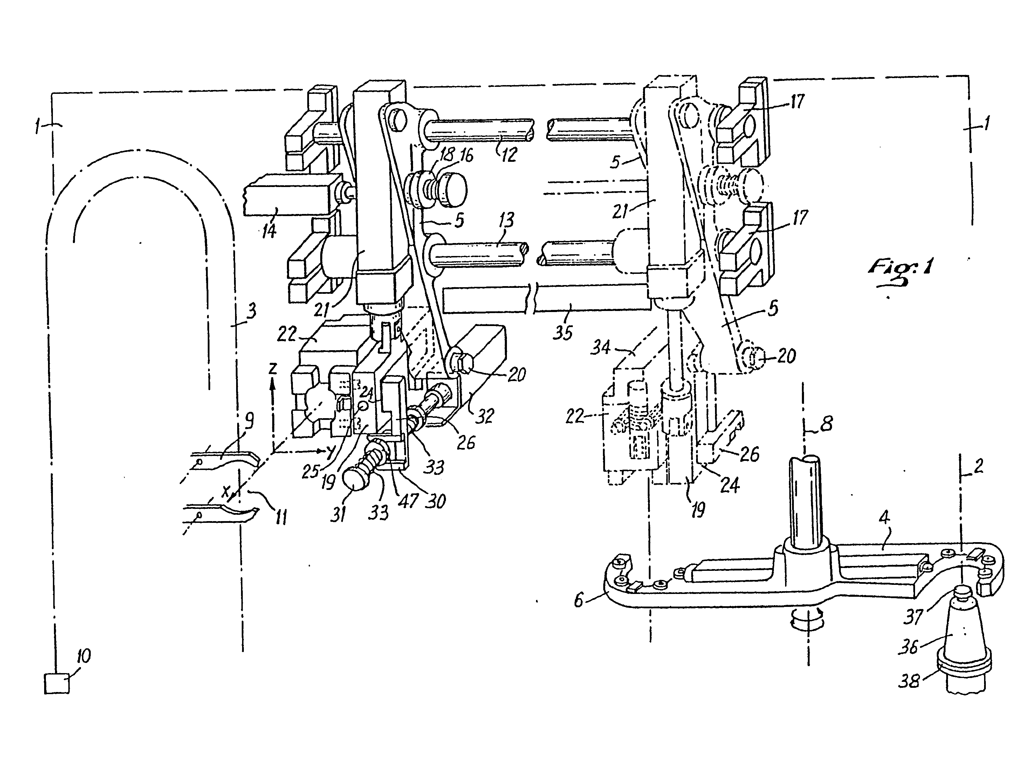

Sur la figure 1, on a schématiquement représenté le bâti de la machine-outil en 1, le dispositif selon l'invention pouvant être adapté à des machines de formes diverses.

La machine-outil 1 comporte une broche porte-outil, non représentée, dont l'axe en position de changement d'outil est vertical et représenté en 2 (direction Z).

Le dispositif de chargement d'outil de l'invention comporte un magasin 3, un bras double 4 et un chariot 5 pour le transfert des outils depuis le magasin 3 jusqu'au bras double 4. Le magasin 3 peut êter du type à disque ou à chaîne porte-pinces 9, les outils se déplaçant avec leur axe horizontal. La solution du magasin 3 du type à chaîne est préférée car, pour un même nombre d'outil elle occupe moins de place, un tel magasin peut aisément êter fixé sur la partie latérale du montant du bâti de la machine, ce qui libère la zone de travail, enfin il est possible de prévoir un poste de chargement du magasin assez bas, en 10, facile d'accès pour les opérateurs, tandis que le poste 11 de prélèvement d'outil par le chariot peut êter placé beaucoup plus haut, en relation avec la hauteur de la broche de la machine au poste d'échange.

Les mouvements du chariot 5 (selon l'axe Y) doivent assurer le déplacement des outils depuis le magasin jusqu'au bras double 4 et leur basculement à axe vertical (axe Z) ce qui, en soi, est connu et être réalisé de différentes manières.

Le bras double 4 est de constitution connue, avec deux pinces 6 et 7 symétriques par rapport à l'axe 8. L'axe 8 est vertical et fixe par rapport au bâti 1 de la machine, et le bras a deux libertés de mouvement: a) coulissement selon l'axe 8 entre une position de prise d'outil, à la fois sur la broche et sur le chariot 5, et une position de dégagement des outils; b) rotation de 180° permettant l'échange des outils en combinaison avec le coulissement précédent.

Avec un dispositif de ce type dans lequel les mouvements du bras double sont simples: rotation de prise des outils, dégagement des outils, rotation d'échange, mise en place des outils et retour en position neutre, l'échange des outils peut être réalisé de façon rapide et sûre, compatible avec une automatisation poussée.

Une fois l'outil échangé, le chariot 5 effectue le retour au magasin 3, la sélection d'un nouvel outil et son transfert en position d'échange pendant que la machine-outil est en cours de phase de travail, de sorte que les temps de transfert entre magasin 3 et poste d'échange ne sont pas pris sur le temps de travail de la machine.

Cependant, pour qu'un tel dispositif fonctionne de manière fiable, il est nécessaire que la position de l'outil au poste d'échange soit très rigoureuse et précise, tandis qu'au poste de prise d'outil ou de remise d'outil par le chariot 5 dans le magasin 3, il est nécessaire de pouvoir rattraper les tolérances de positions des pinces du magasin. En effet, particulièrement lorsqu'il s'agit d'un magasin du type à chaîne comme représenté, les jeux de fonctionnement de la chaîne et les écarts de positionnement d'arrêt d'un outil au poste de chargement 17 du chariot peuvent atteindre jusqu'à 1 mm environ dans les trois directions de l'espace.

Dans ce but, le chariot 5 coulisse sur glissières horizontales fixes par rapport au bâti, en l'espèce les barres 12 et 13 sous l'action d'un vérin 14 dont la tige est reliée au chariot 5 par l'intermédiaire d'un ressort 16, tandis qu'une butée 17 est prévue pour limiter le déplacement du chariot 5 vers la broche. Ainsi, la position d'échange du chariot 5 est rigoureusement défini selon l'axe Y par rapport à de broche 2, tandis qu'en position opposée, le chariot 5 est susceptible d'un déplacement selon l'axe Y pour les rattrapages de jeux et d'écarts.

Conformément à l'invention, il est préféré d'utiliser un seul ressort 16 et que la pièce 18 de liaison du chariot à la tige 15 soit prise entre une butée non représentée et le ressort 16 placé du côté de la broche de sorte qu'il n'y a aucun jeu de positionnement lorsque le chariot 5 est contre la butée 17 tandis qu'il y a un jeu élastique dans un seul sens lorsque le chariot 5 est dans sa position proche du magasin et la course du vérin est établie de telle sorte que cette position soit systématiquement en excès vers le magasin, la fermeture de la pince 9 repoussant élastiquement le chariot 5 à l'encontre du ressort 16.

Le chariot 5 porte un bloc 19 basculant autour d'un axe 20 horizontal et perpendiculare à la direction des outils dans le magasin (axe X), sous l'action d'un vérin 21 porté par le chariot 5. Le bloc 19 porté à son tour un manchon 22 porte-outil; manchon 22 coulisse dans le bloc perpendiculairement à l'axe 20.

Dans la forme préférée de réalisation qui est représentée, le manchon 22 coulisse par le gousset 26 sur un 25 porté par le bloc 19, les déplacements du gousset 26 étant limités vers le bas (position d'échange) par la butée 24. En outre, le manchon 22 possède une possibilité d'oscillations d'amplitude limitée autour de l'arbre 25; le manchon 22 porte à cet effet des patins 27 ou roulements 28 contretenus par ressorts 48 qui glissent sur la face plane 29 du bloc et maintiennent la surface 30 du manchon parallèle à la surface 29.

Ainisi, lorsque le chariot 5 est en position d'échange d'outil (représentée en pointillé sur la partie droite de la figure), le machon porte-outil 22 se trouve en appui sur la butée 24 par le gousset 26, du fait de son propre poids. La position du manchon 22 selon l'axe Z est donc rigoureusement déterminée.

Par contre, dans la position du chariot 5 proche du magasin 3, le bloc 19 étant relevé le jeu d'oscillations du manchon 22 autour de l'axe 25 permet un léger déplacement selon l'axe Z et le rattrapage du jeu de position de la pince 9 selon cet axe, dans la position 11.

D'autre part, au manchon 22 est liée une fourchette 30, qui lorsque le chariot 5 est en position proche du magasin 3 vient coopérer avec l'extrémité de la tige du vérin 32, fixe par rapport au magasin 3, au bâti 1 et aux glissières 12 et 13.

Cette liaison avec l'extrémité 31 du vérin 32 est rendue élastique dans au moins un sens par deux ressorts 33 enserrant un diabolo 47. Le verin 32 assure les mouvements de retrait d'un outil hors de la pince 11 (ou de placement d'un outil dans la pince) et dans cette position, les ressorts 33 assurent le rattrapage des jeux de position de la pince 9 selon l'axe X.

De préférence, pendant la phase de déplacement du chariot 5 (axe Y) sur les glissières 12 et 13, le bloc 19 est maintenu en position relevée par le vérin de basculemet 21. La butée arrière 34, coulissant contre la glissière 35 fixe en rapport aux glissières 12 et 13 et au bâti 1, maintient le manchon 22 en position avancée. L'extémité de la glissière 35, côté magasin, est positionnée de telle sorte que le manchon 22 peut reculer pour dégager le cône de l'outil porté par les pinces 9 du magasin. Le recul du manchon 22 se fait par la pénétration de la fourchette 30 dans le diablo 47 actionné par le vérin 32. Côté bras double, le basculement du bloc 19 n'est pas entravé par la présence de la glissière 35.

La retenue d'un outil 36 dans le manchon 22 est réalisée par des cames 39, 40 agissant sur le bouton 37 placé à l'extrémité de la queue de l'outil, de telle sorte que la rainure 38 reste libre pour l'action du bras double 4 ou de la pince 9.

Les cames 39, 40 sont de préférence des faces planes taillées dans des arbres 41, 42 rotatifs dans le manchon 22 et portant les pignons 43, 44 sur lesquels agit la crémaillère 45. Celle-ci est constammet repoussée par le ressort 46 vers la position de retenue. Un vérin 47 interne au manchon 22, assure la libératon de l'outil à l'encontre du ressort 46.

## Revendications

1. Dispositif changeur d'outil pour machine-outil (1) du type comprenant un magasin (3) fixe, latéral à la machine-outil à distance de la broche, dans lequel les outils se déplacent avec leur axe horizontal, un bras double (4) rotatif et coulissant selon un axe vertical fixe par rapport au bâti de la machine-outil (1), et un chariot (5) porte-outil se déplaçant entre le magasin (3) et le bras double (4) par coulissement sur des glissières horizontales fixes (12,13) sous l'action d'un premier vérin (14), le chariot portant un bloc porte-outil (19) basculant sous l'action d'un second vérin (21) porté par le chariot autour d'un axe horizontal perpendiculaire à la direction des outils dans le magasin, caractérisé en ce que le premier vérin (14) est relié au chariot (5) par l'intermédiaire d'un ressort (16), le bloc (19) porte un manchon porte-outil (22) coulissant sous l'action d'un troisième vérin (32) selon un axe (25) perpendiculaire à l'axe de basculement du bloc (19), ledit manchon étant susceptible d'oscillations de faible amplitude autour de cet axe de coulissement (25), les déplacements du chariot (5) en direction de la broche, le basculement du bloc (19) vers la position verticale et le coulissement du manchon (22) vers le bas lorsque le bloc (19) est en position verticale, étant par contre tous les trois limités par butées.

2. Dispositif selon la revendication 1, caractérisé en ce que le coulissement du manchon (22) dans le bloc (19) est commande, par l'intermédiaire d'au moins un ressort (33), par l'extrémité de la tige d'un vérin fixe (32) par rapport au bâti et le manchon (22) porte une fourchette (30) qui vient coopérer avec un diabolo (47) porté par l'extrémité (31) de la tige du vérin (32) avec interposition desdits ressorts (33), lorsque le chariot (5) est dans la position située à proximité du magasin (3).

3. Dispositif selon l'une quelconque des revendications précédentes, caractérisé en ce que le manchon (22) coulisse dans le bloc (19) sur un arbre (25) porté par ledit bloc, perpendiculaire à l'axe de basculement du bloc (19) et il maintenu en position angulaire avec jeu d'oscillations par des patins (27, 28) portés par le manchon (22) et contretenus par des ressorts, ces patins glissant sur des surfaces planes (29) du bloc (19) parallèles à l'arbre (25).

4. Dispositif selon l'une quelconque des revendications précédentes, caractérisé en ce que la retenue d'un outil dans le manchon (22) est obtenue par la rotation de deux cames (39, 40) situées de part et d'autre d'un bouton terminal (37) porté par la queue de l'outil, rotation résultant de l'action d'une crémaillère commune (45) agissant sur des pignons (43, 44) portés par les arbres porte-cames.

5 Dispositif selon la revendication 4, caractérisé en ce que la crémaillère (45) est repoussée élastiquement par le ressort (46) vers la position de retenue de l'outil.

6. Dispositif selon l'une quelconque des revendications précédentes, caractérisé en ce que le bloc (19) du chariot (5) est relevé pendant le transfert et le coulissement du manchon (22) vers l'arrière, est empêché par appui d'une butée portée par ledit manchon (22) sur une glissière fixe (35) dont l'extrémité proche du magasin est placée de façon à permettre le recul du manchon (22) lorsque le chariot (5) est en position de coopération avec le magasin.

## Patentansprüche

1. Werkzeugumrüstvorrichtung für eine Werkzeugmaschine (1) von der Art mit einem von der Spindel entfernt, seitlich an der Werkzeugmaschine angebrachten ortsfesten Magazin (3), in dem die Werkzeuge horizontal bewegt werden, einem sich um eine in bezug auf das Werkzeugmaschinengestell (1) feststehende vertikale Achse drehenden und senkrecht beweglichen Doppelarm (4) und einem zwischen Magazin (3) und Doppelarm (4) auf feststehenden horizontalen Führungen (12, 13) mittels Antrieb durch einen Arbeitszylinder (14) hin- und herfahrenden Werkzeughalterschlitten (5), auf dem zweiten, auf dem Schlitten um eine horizontale Achse gelagerten, senkrecht zur Richtung der Werkzeuge im Magazin befestigten Arbeitszylinders (21) gekippt wird, dadurch gekennzeichnet, daß der erste Arbeitszylinder (14) mittels einer Feder (16) mit dem Schlitten (5) verbunden ist und daß der Werkzeughalter (19) ein Werkzeugspannfutter (22) aufweist, das sich mittels Antrieb durch einen dritten Arbeitszylinder (32) auf einer Achse (25) senkrecht zur Kippachse des Werkzeughalters (19) hin- und herbewegt, wobei das Spannfutter um diese Verschiebeachse geringfügig beweglich ist und die Schlittenbewegung (5) in Richtung Spindel, das Hochklappen des Werkzeughalters (19) in die Vertikalposition sowie die Bewegung des Spannfutters (22) bei vertikaler Stellung des Werkzeughalters (19) nach unten jeweils durch einen Anschlag begrenzt werden.

2. Vorrichtung nach Anspruch 1, dadurch gekennzeichnet, daß die Hin- und Herbewegung des Spannfutters (22) im Werkzeughalter (19) über zumindest eine dazwischenliegende Feder (33) durch das Schaftende eines in bezug auf das Maschinengestell feststehenden Arbeitszylinders (32) gesteuert wird und daß am Futter (22) eine Gabel (30) angebracht ist, die bei magazinseitiger (3) Position des Schlittens (5) in einen am Schaftende (31) des Arbeitszylinders (32) mit den dazwischenliegenden Federn (33) befestigten Doppelkegel (47) eingreift.

3. Vorrichtung nach Anspruch 1 oder 2, dadurch gekennzeichnet, daß sich das Futter (22) im Werkzeughalter (19) auf einer, auf diesem Werkzeughalter gelagerten Welle (25) senkrecht zur Kippachse des Werkzeughalters (19) bewegt und durch am Futter (22) angebrachte und durch Federn angedrückte Gleitschuhe (27, 28) mit einem gewissen Spiel in der Winkelposition gehalten wird, wobei diese Gleitschuhe auf parallel zur Welle (25) laufenden Planflächen (29) des Werkzeughalters (19) laufen.

4. Vorrichtung nach einem der Ansprüche 1 - 3, dadurch gekennzeichnet, daß die Halterung eines Werkzeugs im Spannfutter (22) durch Drehung von zwei Nocken (39, 40) beiderseits eines am Werkzeugschaft befestigten Endstücks (37) erfolgt, wobei die Drehung durch mit Hilfe einer gemeinsamen Zahnstange (45) betätigte, jeweils auf den Nockenwellen befestigte Ritzel (43, 44) bewirkt wird.

5. Vorrichtung nach Anspruch 4, dadurch gekennzeichnet, daß die Zahnstange (45) von der Feder (46) elastisch in die Werkzeughalteposition gedrückt wird.

6. Vorrichtung nach einem der Ansprüche 1 - 5, dadurch gekennzeichnet, daß der am Schlitten (5) befestigte Werkzeughalter (19) während des Werkzeugtransport angehoben ist und daß ein Rückwärtsgleiten des Futters (22) durch die Auflage eines am Futter (22) befestigten Anschlags auf einer festen Führung (35) verhindert wird, wobei die Stellung des magazinseitigen Führungsendes bei mit dem Magazin arbeitender Position des Schlittens (5) ein Zurückweichen des Futters (22) gestattet.

**Claims**

1. A tool-changer device for a machine tool (1) of the type comprising a fixed magazine (3) on the side of the machine tool, at a distance from the spindle, in which the tools are displaced with their axis horizontal, a double rotary arm (4) sliding along a vertical axis fixed relatively to the frame of the machine tool (1) and a tool-carrier carriage (5) moving between the magazine (3) and the double arm (4) by sliding along fixed horizontal slides (12, 13) by the action of a first jack (14), the carriage supporting a tool carrier block (19) rocking by the action of a second jack (21) carried by the carriage about a horizontal axis perpendicular to the direction of the tools in the magazine, characterized in that the first jack (14) is connected to the carriage (5) through a spring (16), the block (19) carries a tool-holding sleeve (22) sliding by the action of a third jack (32) along an axis (25) perpendicular to the rocking axis of block (19), said sleeve being capable of swinging with a small amplitude about this sliding axis (25), the displacements of the carriage (5) towards the spindle, the tipping of block (19) towards its vertical position and the sliding of the sleeve (22) downwards when the block (19) is in a vertical position being on the contrary all three restricted by stops.

2. A device according to claim 1, characterized in that the sliding of sleeve (22) in the block (19) is actuated, through the intermediary of at least one spring (33), by the end of the stem of a jack (32) fixed relatively to the frame and the sleeve (22) carries a fork (30) which moves into cooperation with a spool (47) carried by the end (31) of the stem of the jack (32), the said springs (33) being interposed, when the carriage (5) is in the position located in proximity to the magazine (3).

3. A device according to any of the above claims, characterized in that the sleeve (22) slides inside the block (19) on a shaft (25) carried by said block, perpendicular to the tipping axis of block (19) and is maintained in angular position with a swinging clearance by runners (27, 28) carried by sleeve (22) and biased by springs, said runners sliding on planar surfaces (29) of block (19) parallel to the shaft (25).

4. A device according to any of the above claims, characterized in that the retaining of a tool within sleeve (22) is obtained through the rotation of two cams (39, 40) located on either side of a terminal knob (37) carried by the tool stem, this rotation resulting from the action of a common rack (45) actuating pinions (43, 44) carried on the cam shafts.

5. A device according to claim 4, characterized in that the rack (45) is resiliently biased by the spring (46) towards the tool retaining position.

6. A device according to any of the above

**0 128 811**

claims, characterized in that the block (19) of carriage (5) is raised during the transfer and the rearward sliding of sleeve (22) is prevented by a stop carried by said sleeve (22) resting against a fixed slide (35), the end of said slide close to the magazine being placed so as to allow the recoil of sleeve (22) when the carriage (5) is in a position for cooperating with the magazine.

Fig. 1

0 128 811

# *Fig:2*

Fig. 3

Fig. 4